# EUROPEAN PATENT SPECIFICATION

(11) **EP 2 109 726 B1**
(45) Date of publication and mention of the grant of the patent: **11.07.2012**
(21) Application number: 08709596.4
(22) Date of filing: 07.02.2008
(51) Int. Cl.: F16H 15/38, F16H 37/08

(54) **CVT CONTROL SYSTEM**
CVT-STEUERUNGSSYSTEM
SYSTÈME DE COMMANDE CVT

(30) Priority: 09.02.2007 GB 0702490
(43) Date of publication of application: 21.10.2009
(73) Proprietor: TOROTRAK (DEVELOPMENT) LIMITED, Leyland Lancashire PR26 7UX (GB)
(72) Inventor: GREENWOOD, Christopher John, Preston, Lancashire PR5 3WS (GB); OLIVER, Robert Andrew, Preston, Lancashire PR5 5YQ (GB)
(74) Representative: Geary, Stephen
(86) International application number: PCT/GB2008/050076
(87) International publication number: WO 2008/096175

(56) References cited:
- EP-A- 0 899 484
- EP-A- 1 138 981
- WO-A-2006/103294
- DE-A1-102005 010 913
- US-A1- 2005 037 887

## Description

The present invention is concerned with control of a multi-regime continuously variable transmission ("CVT").

A CVT typically includes a variator. The word "variator" will be used herein to refer to a device that has a rotary input and a rotary output, and which transfers drive from one to the other at a drive ratio (the ratio of output speed to input speed) than can be steplessly varied. Most, if not all, variators have some movable torque transfer part which is involved in the transfer of drive and whose position corresponds to the variator ratio. In the well known case of a toroidal race, rolling traction type variator, rollers serve as the movable torque transfer parts. The rollers transmit drive from one toroidally recessed race to another and their motion involves a change in roller inclination which is associated with a change in variator drive ratio. A force is applied to the movable torque transfer part to influence its position, and so to influence variator drive ratio. In this way the variator is controlled.

CVTs often incorporate some arrangement of clutches (which may simply be formed as brakes, in some examples) for selecting between two or more regimes, expanding the available range of transmission ratios.

Control of CVTs is typically exercised by a sophisticated electronic controller. EP 1138981 (Nissan Motor Co., Ltd) describes a CVT and an associated control system.

An object of the present invention is to provide a simple system for providing coordinated control of a variator ratio and regime in a CVT.

According to the present invention there is a system for controlling a continuously variable transmission comprising a variator, a low regime clutch (C_{L}) for selectively engaging a low transmission regime, and a high regime clutch (C_{H}) for selectively engaging a high transmission regime, the system comprising a control part which is movable by the user along a control path from a low ratio end to a high ratio end and whose position dictates variator ratio and transmission ratio, a a low regime clutch control device which engages the low clutch, when the control part is between the low ratio end of its path and a low clutch transition point, and which releases the low clutch when the control part is between the low clutch transition point and the high ratio end of its path, and a high regime clutch control which releases the high regime clutch when the control part is between the low ratio end of its path and a high clutch transition point, and which engages the high regime clutch, when the control part is between the high clutch transition point and the high ratio end of its path.

Specific embodiments of the present invention will now be described, by way of example only, with reference to the accompanying drawings, in which:-
Figures 1 and Ib are simplified representations of a variator suitable for use in implementing the present invention, Figure Ia omitting certain components for the sake of simplicity and being a view along a radial direction, whilst Figure Ib is a perspective view;
Figures 2a and 2b are simplified representations of a CVT suitable for use in implementing the present invention;
Figure 3a is a schematic representation of a variator control system embodying the present invention;
Figures 3b and 3c show regime control valves of the system in two different states;
Figures 3d and 3e show a neutral release valve of the system in different states; and
Figure 4 is a more detailed representation of a ratio control valve and related components of the system;

### The Variator

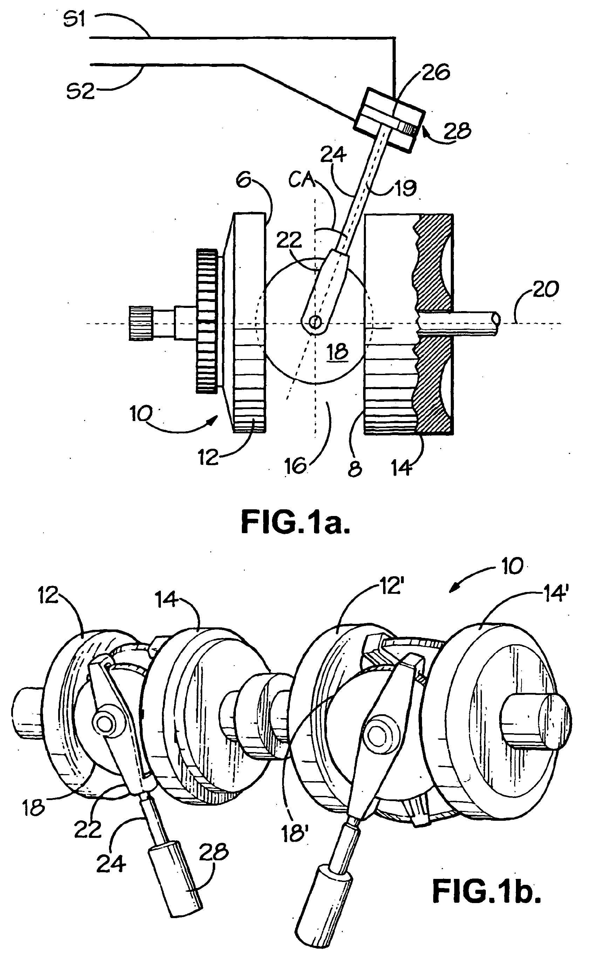

Figures 1a and 1b show a variator 10 of the well known toroidal race, rolling traction type. The present invention has been developed in connection with a CVT using this type of variator, which is particularly well suited to the purpose, but in principle variators of other types could be used.

The variator 10 comprises co-axially mounted input and output races 12, 14, 12', 14', adjacent faces 6, 8 of which are semi-toroidally recessed and define generally toroidal cavities 16, 16' containing movable torque transfer parts in the form of rollers 18, 18'. The variator typically has two or three such rollers spaced about each cavity 16, 16' at circumferential intervals. Each roller 18 runs upon the faces 6, 8 of the respective races 12, 14 and so serves to transmit drive from one to the other. The roller 18 is able to move back and forth along a circumferential direction about the common axis 20 of the races 12, 14. It is also able to precess. That is the roller's axis is able to turn, changing the inclination of the roller axis to the disc axis. In the illustrated example, these motions are provided for by rotatably mounting the roller 18 in a carrier 22 coupled by a stem 24 to a piston 26 of an actuator 28. A line 19 from the centre of the piston 26 to the centre of the roller 18 constitutes a precession axis about which the whole assembly can turn. Precession of the roller results in changes of the radii of the paths traced upon the races 12, 14 by the roller, and hence in a chance of variator drive ratio.

Note that in this example the precession axis 19 does not lie precisely in a plane perpendicular to the common axis 20, but is instead inclined to this plane. The angle of inclination is labelled CA in the drawing, and is known as the "castor angle". As the roller moves back and forth it follows a circular path centred upon the common axis 20. Furthermore the action of the races 12, 14 upon the roller creates a steering moment which tends to maintain it at such an inclination that the roller axis intersects the common axis 20. This intersection of the axes can be maintained, despite movement of the roller back and forth along its circular path, by virtue of the castor angle. As the roller moves along its path, it is also steered by the action of the races, causing it to precess such as to maintain the intersection of the axes. The result is that the position of the roller along its path corresponds to a certain roller inclination and hence to a certain variator drive ratio.

The actuator 28 receives opposed hydraulic fluid pressures through supply lines S1, S2. The force thus created by the actuator 28 urges the roller along its circular path about the common axis 20, and at equilibrium it is balanced by forces exerted upon the roller by the races 12, 14. The force exerted by the races is proportional to the sum of the torques externally applied to the variator races. This sum - the variator input torque plus the variator output torque - is the net torque that must be reacted to the variator's mountings, and is referred to as the reaction torque.

### The Transmission

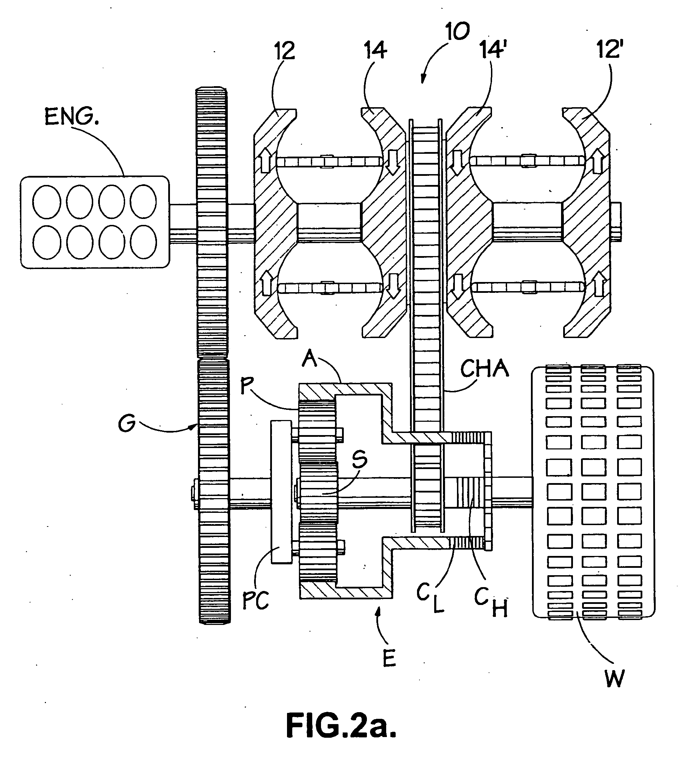

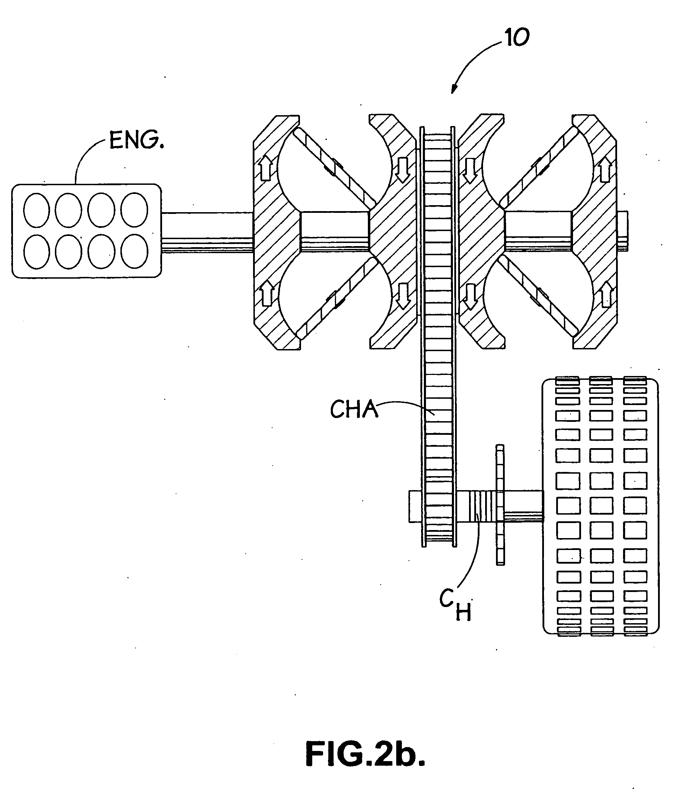

Figures 2a and 2b illustrate, in highly stylised form, one example of a two regime transmission suitable for implementing the present invention. Numerous different types of multi-regime CVT are known in the art and many of these could be used in implementing the present invention. Hence while constructional details of the transmission will be described, these should not be taken to be limiting upon the scope of the invention.

In the drawings a rotary power source, formed in this example as an internal combustion engine, is indicated at ENG and drives the input races 12, 12' of the variator 10. The transmission has an epicyclic "shunt" geartrain E having a planet carrier PC coupled to the engine through a geartrain G, and a sun gear S coupled to the variator output races 14, 14' of the variator. In the illustrated embodiment this coupling is though a chain CHA, although in other transmissions a co-axial power take off from the variator output is often used. Planet gears P mounted on the carrier PC drive an annular output gear A and mesh with the sun gear S. Driven vehicle wheels are represented at W.

The illustrated transmission is operable in high and low regimes, engageable by means of high and low regime clutches C_{H} and C_{L}. When low regime clutch C_{L} is engaged, the output gear A of the shunt E is coupled to the vehicle wheels. Note that the speed of the output gear A is determined by the speeds of both the planet carrier PC (which is a multiple of the engine speed) and the sun S (whose speed varies with variator ratio). At a specific variator ratio ("the geared neutral ratio") these speeds cancel each other out and output gear A is consequently stationary. In this condition the transmission effectively provides an infinite speed reduction, its output being stationary despite being mechanically coupled to the moving engine. This condition is referred to as "geared neutral". Merely by adjusting variator ratio, whilst the transmission is in low regime, a range of transmission ratios on either side of geared neutral - providing both forward and reverse vehicle travel - can be obtained.

Disengaging the low regime clutch C_{L} and engaging the high regime clutch C_{H} places the transmission in high regime, making available an increased range of forward drive ratios. In this condition only the components seen in Figure 2b are in the path for power flow between engine and w heels. The variator output is coupled through power take off CHA, and high regime clutch C_{H} to the wheels W. Geared neutral is not available in high regime.

The relationship between variator ratio and transmission ratio (the ratio of transmission output speed to transmission input speed) differs in the two regimes. In high regime, increasing variator ratio causes an increase in the overall transmission ratio. In low regime, increasing variator ratio causes a decrease in the overall transmission ratio. Account must be taken of this in controlling the variator.

Gear ratios are selected in the transmission such that at some variator ratio (the "synchronous ratio"), which is at one extreme of the variator's ratio range, both high and low regimes result in an identical transmission ratio. Regime changes can be smoothly carried out at synchronous ratio, since the transition produces no change in the ratio provided by the transmission as a whole.

### User Operable Controls

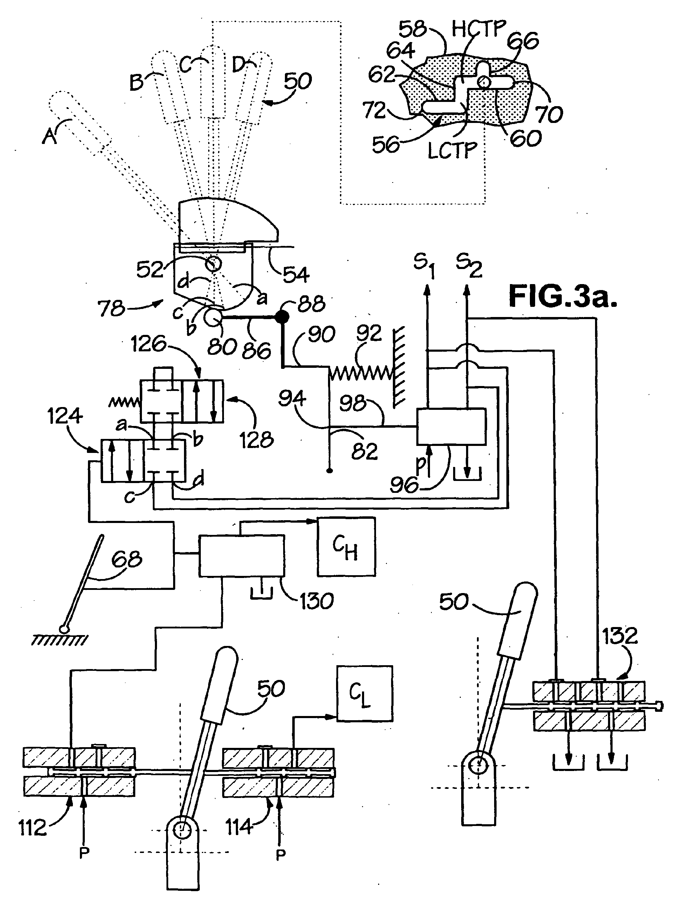

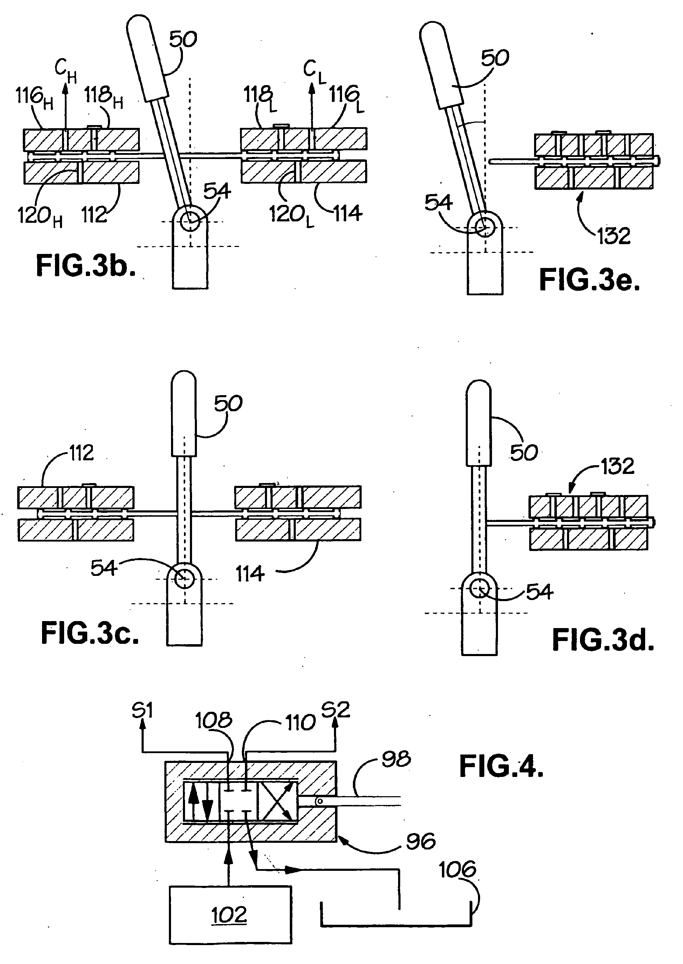

A control system embodying the present invention will now be described with reference to Figure 3. The control system serves to carry out coordinated control of (a) the hydraulic control pressures applied to the variator, and hence the variator ratio and (b) the hydraulic control pressures applied to the high and low regime clutches C_{H} and C_{L}.

The driver's principal control is formed by a user operable part 50, which is formed in the present embodiment as a hand lever and will be referred to as such below although it could take other forms. The hand lever 50 is movable fore-and-aft about a first axis 52, perpendicular to the plane of the paper in Figure 3, and laterally about a second axis 54 lying in the plane of the paper. The terms "fore-and-aft" and "lateral" will be used with reference to the lever's motion, merely for the sake of convenience, but do not necessarily reflect the directions of the lever's travel relative to the vehicle. The movement of the hand lever 50 is constrained by engagement with a shaped slot 56 in a guide plate 58. The slot has a first fore-and-aft extending portion which will be referred to as to the low regime zone 60, a second fore-and-aft extending portion which will be referred to as to the high regime zone 62, and a portion extending laterally from the low regime zone to the high regime zone, which will be referred to as to the gate 64. Also mid-way along the low regime area is a lateral branch, to be referred to as the neutral zone 66.

By moving the hand lever 50, the driver exercises control over both the variator 10 and the clutches C_{H} and C_{L}. In the present embodiment, the driver can obtain any ratio in the transmission's range, including geared neutral, simply by moving the hand lever 50.

However the system also has a user operable torque release control, which is formed in the present embodiment as a torque release pedal 68. Again, this control could take other forms, e.g. a hand operable lever. The function of the torque release pedal 68 is analogous to that of the clutch pedal in an automobile. By operating it, the user effectively de-couples the transmission output from the engine and enables it to freewheel. The manner in which this is achieved will be explained below.

### Variator Ratio Control

Variator ratio - and the drive ratio provided by the transmission as a whole - is adjusted by moving the hand lever 50 fore-and-aft. Moving the hand lever 50 to its furthest aft position 70 causes the variator to adopt its highest available ratio and, due to the effect of the shunt gearing described above, and with the low regime clutch C_{L} engaged, causes the transmission as a whole to adopt its maximum available reverse gear. Hence the vehicle is caused to travel backwards. If the hand lever 50 is advanced it reduces variator ratio and so decreases the reverse gear ratio of the whole transmission. When the hand lever 50 reaches the neutral zone 66, (the position in which it is shown in Figure 3) the transmission is placed in geared neutral - i.e. its output is stationary, as is the vehicle. Advancing the hand lever 50 further along the low regime zone 60 causes the variator ratio to continue to decrease, and the transmission to provide a forward drive ratio which increases until, when the hand lever 50 reaches the gate 64, the variator is at its minimum ratio (which is its synchronous ratio, as explained above) and the transmission is at the highest forward drive ratio available in low regime.

To advance the hand lever 50 further, it must be moved across the gate 64. This causes the transmission to undergo a regime change, from low to high, as will be explained below.

As the lever is then advanced along the high regime zone 62, it causes the variator ratio to increase and, the high regime clutch C_{H} now being engaged and the low regime clutch C_{L} disengaged, causes the drive ratio of the whole transmission likewise to increase, until maximum forward gear is reached with the hand lever 50 at the forward end 72 of its travel.

The mechanism through which the hand lever 50 controls the variator 10 is hydromechanical, and comprises (a) a conversion mechanism, which converts the position of the hand lever 50 to a position signal representing a required variator ratio, (b) a comparator, which serves to compare actual variator ratio with the desired variator ratio and to produce a corresponding correction signal, and (c) a ratio c ontroller which receives the correction signal and, in response, applies a corrective force to the variator to urge it to adopt the desired ratio. The comparator and ratio controller together provide closed loop control over the variator to cause it to adopt the value dictated by the conversion mechanism. The physical construction of these three functional units will be described in turn below.

The conversion mechanism comprises a cam 78 and a follower 80. The cam 78 rotates about first axis 52 when the hand lever 50 is moved fore-and-aft, and the follower 78 is thus displaced. The position of the follower 80 forms a mechanical signal representing the desired variator ratio.

The conversion mechanism is required because the relationship between hand lever position and desired variator ratio is different in the two regimes, as explained above. In low regime, advancing hand lever 50 reduces variator ratio. In high regime, advancing hand lever 50 increases variator ratio. In Figure 3 hand lever 50 is shown in phantom in four positions A-D. Lever positions A and D respectively represent maximum reverse transmission ratio (in low regime) and maximum forward transmission ratio (in high regime). Both require the variator to be at its maximum ratio, and accordingly the corresponding cam radii a and d are identical. In the illustrated embodiment these are the minimum cam radii. Lever position C corresponds to geared neutral and cam radius c is chosen to provide the geared neutral variator ratio. Lever position B is obtained when the hand lever 50 is in the gate and the variator is at synchronous ratio - i.e. at its lowest available value. Cam radius b is chosen to provide this, and is the cam's maximum radius, in this example.

The comparator is in this embodiment a simple mechanical device and once more the skilled person would be well able to devise numerous other devices suitable for the purpose. It uses a comparator bar 82, a first end of which is coupled to the follower 80 and a second end of which is coupled to the rollers (indicated schematically at 84 in Figure 3) of the variator 10. In the illustrated example coupling of the follower 80 to the comparator bar is through an elbowed lever 86 having a fulcrum at 88. One end of this lever carries the follower 80. Its other end is connected to the comparator b ar 8 2 b y a wire linkage 9 0. A spring 9 2 keeps the wire linkage 90 in tension and also serves to urge the follower 80 against the cam 78. A mid point 94 of the comparator bar is coupled to the ratio controller, which in this embodiment takes the form of a ratio control valve 96.

Figure 4 shows the ratio control valve 96, whose spool is connected through a rod 98 to the mid point 94 of the comparator bar. An inlet port 100 of the ratio control valve 96 is connected to a pump 102 and is supplied with pressurised fluid. An exhaust port 104 leads to the transmission's sump 106. Supply ports 108 and 110 lead to the respective lines S1 and S2, and so to opposite sides of the pistons 26 controlling the variator rollers (refer again to Figure 1 in this regard). The valve has a middle position in which it closes all ports, an S1 supply position in which line S1 is connected to pump 102 and line S2 is exhausted to sump 106, and an S2 supply position in which supply line S2 is pressurised from the pump 102 whilst S1 is exhausted to the sump 106. The valve's response is proportional. That is, the degree of opening of its ports varies continuously with the position of its spool.

Consider what happens if a mismatch arises between (a) the ratio dictated by the user through the hand lever 50 and the conversion mechanism, and (b) the actual variator ratio. Suppose, for the sake of example, that the mismatch arises because the hand lever 50 is moved (it could equally arise because the ratio drifts slightly from the required value) to cause the first end of the comparator bar 82 to move rightward, as viewed. If we suppose that the second end of the comparator bar 82 is stationary, then the bar's mid point must also move rightward causing an adjustment to the ratio control valve 96. In this way the pressures in S1 and S2 arc adjusted, tending to bring the variator ratio to the desired value, which results in leftward movement of the comparator bar's second end, until the desired ratio is achieved and the spool of ratio control valve 96 is restored to its middle position. The effect is to provide closed loop control of variator ratio.

### Regime Control

The variator control system must manage actuation of the transmission's clutches C_{H} and C_{L}. Specifically:-
i. while the hand lever 50 is in the low regime zone 60 and the user has not disengaged the transmission, the low regime clutch C_{L} is to be engaged and the high regime clutch C_{H} disengaged;
ii. while the hand lever 50 is in the high regime zone 62 and the user has not disengaged the transmission, the high regime clutch C_{H} is to be engaged and the low regime clutch C_{L} disengaged; and
iii. as the transmission moves through the synchronous ratio, the transition from low regime clutch engagement to high regime clutch engagement, or vice versa, must be managed.

In the embodiment illustrated in Figure 3, there is a point in the travel of the hand lever 50, to be referred to as to the low clutch transition point (LCTP), moving through which causes the state of the low clutch to change - from engaged to disengaged, as the lever advances, and from disengaged to engaged, as the lever is withdrawn. Also the hand lever has a high clutch transition point (HCTP), moving through which causes the state of the high clutch to change - from disengaged to engaged, as the lever is advanced, and from engaged to disengaged, as the lever is withdrawn. Both the LCTP and the HCTP are at hand lever positions corresponding to synchronous ratio. They could in principle coincide, so that the two clutches would change state simultaneously, but in the present embodiment the LCTP is at a more advanced lever position than the HCTP. Hence the oncoming clutch is engaged before the old clutch is released. This is possible because the regime change takes place at synchronous ratio.

In the illustrated embodiment regime change takes place as the hand lever 50 is moved across the gate 64. As a result the driver is made aware that regime change is taking place, which may be desirable. The lateral position of the hand lever 50 controls the clutches through high and low clutch valves 112, 114 whose spools are coupled to the hand lever 50 and moved by lateral movement of it.

The high and low clutch valves 112, 114 each have a clutch supply port 116_{H}, 116_{L} leading to the relevant clutch C_{H} and C_{L}, a clutch exhaust port 118_{H}, 118_{L} leading to the sump 106, and an input port 120_{H}, 120_{L} connected to a pump (which may be the same pump 102 used to supply the variator control pressures) to supply pressurised hydraulic fluid.

When the transmission is in high regime, the hand lever 50 is in the high regime zone 62 and hence in the lateral position seen in Figure 3b. The low regime clutch C_{L} is exhausted through low clutch valve 114, the high regime clutch C_{H} is pressurised through high clutch valve 112 and only the high regime clutch C_{H} is thus engaged. When the transmission is in low regime, the hand lever 50 is in the low regime zone 60 and hence in the lateral position seen in Figure 3c. The high regime clutch is exhausted. The low regime clutch is pressurised and thus engaged. The lateral movement of hand lever 50 needed to change from one of these states to the other can only take place when the lever is in the gate 64 and the transmission is thus at synchronous ratio.

### Torque Release

In a conventional motor vehicle with a manual transmission, the driver is provided with a clutch pedal hydraulically coupled to a clutch connecting the engine to the gearbox, so that depressing the clutch pedal disconnects the engine and allows the vehicle to freewheel. The torque release pedal 68 provides somewhat similar functionality but operates in a different way.

In the type of transmission illustrated in Figure 2, there are in principle two ways to operatively de-couple the vehicle wheels from the engine. The first is to release both clutches C_{H}, C_{L}. The second is to exhaust the pressures in supply lines S1 and S2. When these pressures are exhausted, the piston 26 is unable to apply any force to the variator rollers 18 (refer once more to Figure 1 in this regard). Consequently the variator 10 is then unable to sustain a reaction torque. In this condition the variator automatically adopts a ratio determined by the relative speeds of the engine and the vehicle wheels. The wheels are not *physically* disconnected from the engine, but a reable to freewheel because the variator is unable to apply torque to them. This mode of operation will be referred to as "reaction torque release".

Figure 3 shows a reaction torque release valve 124 which is a proportional valve controlled by the user through a mechanical coupling to the torque release control 68. The reaction torque release valve 124 operates in conjunction with an interlock valve 126, whose spool is subject to a control pressure taken from the low regime clutch C_{L}, as indicated by an arrow 128.

When the transmission is in low regime, interlock valve 126 is thus maintained in a state in which it links ports a and b of the reaction torque release valve 124. Ports c and d of the reaction torque release valve 124 are respectively connected to the supply lines S1 and S2. Whilst the transmission is in low regime, actuation of the torque release pedal 68 by the driver opens the reaction torque release valve 124 and provides a path between the pressure supply lines S1 and S2. When this valve is fully open, pressures in S1 and S2 are at least substantially equalised, to provide the reaction torque release function. Some pressure difference maybe maintained, providing a degree of "creep torque". Also the reaction torque release valve 124 is a proportional valve, so that the driver can partially depress the torque release pedal 68 to set an intermediate level of wheel torque, just as with a conventional clutch control.

A driver familiar with manual transmission will perhaps bring the vehicle to a halt by depressing the torque release pedal 68 and applying the brakes. This creates no difficulties provided that the transmission is in low regime. As the vehicle comes to a halt, the transmission is brought to the geared neutral state. However, if the vehicle is in high regime, releasing variator reaction torque will not enable the driver to stop the vehicle, since high regime contains no geared neutral state. To put this another way, the variator would reach the end of its ratio range before the vehicle came to a halt.

In high regime, interlock valve 126 disconnects ports a and b at reaction torque release valve 124, rendering this valve ineffective. Reaction torque release is thus not available in high regime. Instead, torque release is provided by control of the high regime clutch C_{H}. Note i n t his regard that the pressure output from high clutch valve 112 is not connected directly to the high regime clutch, but is instead led to a high clutch modulator valve 130 which is itself controlled through a mechanical coupling to the torque release pedal 68, depressing which causes the high regime clutch to be exhausted to the sump. Hence by depressing the pedal 68, the user release the high regime clutch C_{H} and so de-couples the engine from the wheels.

### Geared Neutral

It is not necessary for the user to use the torque release pedal to bring the vehicle to a halt. He/she can alternatively simply use the hand lever 50 to place the transmission in geared neutral, which - in the present embodiment - can be done in a straightforward and positive way by moving the hand lever laterally into the neutral zone 66. However, if the lever position dictated by the neutral zone 66 differed slightly from the position needed to achieve geared neutral (e.g. due to minor maladjustment) the result could in principle be to inadvertently apply a large torque to the vehicle wheels. To avoid any such difficulty, the illustrated system is adapted to release variator reaction torque when the hand lever 50 is moved into the neutral zone 66. This is achieved using a neutral release valve 132 having respective ports connected to the supply lines S1 and S2. As a study of Figures 3, 3d and 3e will confirm, whilst the hand lever 50 is in any of its "drive" zones the high regime zone 62, the low regime zone 60 and the gate 64 - the neutral release valve 132 closes the aforementioned p orts and has no effect on transmission operation. When the hand lever 50 is moved into neutral zone 66, these ports are opened to exhaust supply lines S1 and S2, releasing variator reaction torque.

## Claims

1. A system for controlling a continuously variable transmission comprising a variator (10) a low regime clutch (C_{L}) for selectively engaging a low transmission regime, and a high regime clutch (C_{H}) for selectively engaging a high transmission regime, **characterised in that** the system comprising a control part (50) which is movable by the user along a control path from a low ratio end (60) to a high ratio end (62) and whose position dictates variator ratio and transmission ratio, a low regime clutch control device which engages the low clutch (C_{L}) when the control part (50) is between the low ratio end (60) of its path and a low clutch transition point (LCTP), and which releases the low clutch (C_{L}) when the control part (50) is between the low clutch transition point (LCTP) and the high ratio end (62) of its path, and a high regime clutch control which releases the high regime clutch (C_{H}) when the control part (50) is between the low ratio end (60) of its path and a high clutch transition point (HCTP), and which engages the high regime clutch (C_{H}) when the control part (50) is between the high clutch transition point (HCTP) and the high ratio end (62) of its path.

2. A system as claimed in claim 1, in which the low clutch transition point and the high clutch transition point are both at points in the control path corresponding to a synchronous variator ratio.

3. A system as claimed in claim 1 in which the high clutch transition point is nearer to the low ratio end of the control path than the low clutch transition point, so that when the control part (50) is between the transition points, both clutches (C_{L}, C_{H}) are engaged.

4. A system as claimed in claim 1 in which the high clutch transition point and the low clutch transition point are the same.

5. A system as claimed in any preceding claim comprising a conversion mechanism which converts control part (50) position to a mechanical signal representing required variator ratio.

6. A system as claimed in claim 5 in which the conversion mechanism comprises a cam surface (18) and a follower (80) whose position forms the mechanical signal.

7. A system as claimed in claim 6 in which the shape of the cam surface (18) is such that, as the control part (50) is moved from the low ratio end to the high ratio end of its control path, the follower (80) is displaced by the cam surface (18) first in one direction and then in the opposite direction.

8. A system as claimed in claim 7 in which the reversal of direction of movement of the follower (80) takes place when the follower (80) is in a position corresponding to the variator's geared neutral ratio.

9. A system as claimed in any of claims 5 to 8 in which the mechanical signal representing required variator ratio is coupled to a comparator which also receives a mechanical signal representing current variator ratio, and which provides a mechanical signal representing variator ratio error.

10. A system as claimed in claim 9 when dependant on claim 6 in which the comparator comprises a bar (82) coupled at a first point to the follower (80) and at a second point to a coupling to the variator rollers (84) the mechanical signal being provided through a coupling to the bar (82) intermediate said first and second points.

11. A system as claimed in claim 9 or claim 10 in which the comparator controls a ratio control valve arranged to apply a hydraulic control pressure to the variator (10).

12. A system as claimed in any preceding claim in which the control part (50) is movable in a first direction to change variator ratio and in a second direction to change the states of the high and low regime clutches.

13. A system as claimed in claim 12 in which the control path has
(a) a first portion extending from the low ratio end of the control part's (50) travel and along said first direction
(b) a second portion extending along said second direction and
(c) a third portion extending along said first direction,
so that moving the control part from the low ratio end of the path to the high ratio end involves moving it along the second portion to change the valve states and so execute a regime change.

14. A system as claimed in claim 12 or claim 13 comprising at least one valve operably coupled to the control part (50) so that its state is changeable by moving the control part (50) along the second direction, the valve controlling hydraulic pressure to at least one of the clutches (C_{L}, C_{H}).

## Patentansprüche

1. System zum Steuern eines stufenlosen Getriebes, umfassend einen Variator (10), eine Kupplung (C_{L}) für den unteren Betriebszustand zum selektiven Einkuppeln eines unteren Transmissionsbetriebszustandes und eine Kupplung (C_{H}) für den oberen Betriebszustand zum Einkuppeln eines oberen Transmissionsbetriebszustandes, **dadurch gekennzeichnet, dass** das System umfasst ein Steuerteil (50), das durch den Benutzer entlang eines Steuerungsweges von einem Ende (60) mit niedrigem Verhältnis zu einem Ende (62) mit hohem Verhältnis bewegbar ist und dessen Position Variatorverhältnis und Transmissionsverhältnis diktiert, eine Kupplungssteuerungseinrichtung für den unteren Betriebszustand, die an der unteren Kupplung (C_{L}) angreift, wenn sich das Steuerteil (50) zwischen dem Ende (60) mit niedrigem Verhältnis seines Weges und einem unteren Kupplungsübergangspunkt (LCTP) befindet, und die die untere Kupplung (C_{L}) löst, wenn sich das Steuerteil (50) zwischen dem unteren Kupplungsübergangspunkt (LCTP) und dem Ende (62) mit hohem Verhältnis seines Weges befindet, und eine Kupplungssteuerung für den oberen Betriebszustand, der die Kupplung (C_{H}) für den oberen Betriebszustand löst, wenn sich das Steuerteil (50) zwischen dem Ende (60) mit niedrigem Verhältnis seines Weges und einem oberen Kupplungsübergangspunkt (HCTP) befindet, und die an der Kupplung (C_{H}) für den oberen Betriebszustand angreift, wenn sich das Steuerteil (50) zwischen dem oberen Kupplungsübergangspunkt (HCTP) und dem Ende (62) mit hohem Verhältnis seines Weges befindet.

2. System nach Anspruch 1, bei dem der untere Kupplungsübergangspunkt sowie der obere Kupplungsübergagnspunkt bei Punkten auf dem Steuerungsweg liegen, die einem synchronen Variatorverhältnis entsprechen.

3. System nach Anspruch 1, bei dem die obere Kupplungsübergangspunkt näher bei dem Ende mit niedrigem Verhältnis des Steuerungsweges als der untere Kupplungsübergangspunkt liegt, so dass, wenn sich das Steuerteil (50) zwischen den Übergangspunkten befindet, beide Kupplungen (C_{L}, C_{H}) im Eingriff sind.

4. System nach Anspruch 1, bei dem der obere Kupplungsübergangspunkt und der untere Kupplungsübergangspunkt der gleiche sind.

5. System nach einem der vorhergehenden Ansprüche, umfassend einen Umwandlungsmechanismus, der die Position des Steuerteils (50) in ein mechanisches Signal umwandelt, das das erforderliche Variatorverhältnis darstellt.

6. System nach Anspruch 5, bei dem der Umwandlungsmechanismus eine Nockenoberfläche (18) und ein angetriebenes Zahnrad (80) umfasst, dessen Position das mechanische Signal bildet.

7. System nach Anspruch 6, bei dem die Form der Nockenoberfläche (18) so ist, dass wenn das Steuerteil (50) von dem Ende mit niedrigem Verhältnis zum Ende mit hohem Verhältnis seines Steuerungsweges bewegt wird, das angetriebene Zahnrad (80) durch die Nockenoberfläche (18) zuerst in eine Richtung und dann in die entgegengesetzte Richtung versetzt wird.

8. System nach Anspruch 7, bei dem die Bewegungsrichtungsumkehr des angetriebenen Zahnrades (80) stattfindet, wenn sich das angetriebene Zahnrad (80) in einer Position befindet, die dem eingelegten neutralen Verhältnis des Variators entspricht.

9. System nach einem der Ansprüche 5 bis 8, bei dem das mechanische Signal, das das erforderliche Variatorverhältnis darstellt, an einen Komparator gekoppelt wird, der auch ein mechanisches Signal erhält, das das gegenwärtige Variatorverhältnis darstellt, und der ein mechanisches Signal bereitstellt, das den Variatorverhältnisfehler darstellt.

10. System nach Anspruch 9, wenn er von Anspruch 6 abhängt, bei dem der Komparator eine Stange (82) umfasst, die an einem ersten Punkt an das angetriebene Zahnrad (80) und an einem zweiten Punkt an eine Verbindung zu den Variatorrollen (84) gekoppelt ist, wobei das mechanische Signal über eine Verbindung mit der Stange (82) zwischen dem ersten und dem zweiten Punkt bereitgestellt wird.

11. System nach Anspruch 9 oder Anspruch 10, bei dem der Komparator ein Verhältnissteuerungsventil steuert, das so angeordnet ist, dass es einen hydraulischen Steuerdruck am Variator (10) anwendet.

12. System nach einem der vorhergehenden Ansprüche, bei dem das Steuerteil (50) in eine erste Richtung, um das Variatorverhältnis zu ändern, und in eine zweite Richtung bewegbar ist, um die Zustände der Kupplungen des oberen und unteren Betriebszustandes zu ändern.

13. System nach Anspruch 12, bei dem der Steuerungsweg aufweist
(a) einen ersten Abschnitt, der sich von dem Ende mit niedrigem Verhältnis der Bewegung des Steuerteils (50) weg und entlang der ersten Richtung erstreckt,
(b) einen zweiten Abschnitt, der sich entlang der zweiten Richtung erstreckt, und
(c) einen dritten Abschnitt, der sich entlang der ersten Richtung erstreckt,
so dass ein Bewegen des Steuerteils von dem Ende mit niedrigem Verhältnis des Weges zum Ende mit hohem Verhältnis beinhaltet, es entlang des zweiten Abschnitts zu bewegen, um die Ventilzustände zu ändern und so eine Betriebszustandsänderung auszuführen.

14. System nach Anspruch 12 oder 13, umfassend wenigstens ein Ventil, das wirksam an das Steuerteil (50) gekoppelt ist, so dass sein Zustand durch Bewegen des Steuerteils (50) entlang der zweiten Richtung änderbar ist, wobei das Ventil einen hydrostatischen Druck auf wenigstens eine der Kupplungen (C_{L}, C_{H}) steuert.

## Revendications

1. Système pour commander une transmission variable en continu, comprenant un variateur (10), un embrayage de faible régime (C_{L}) pour engager de manière sélective un faible régime de transmission, et un embrayage de régime élevé (C_{H}) pour engager de manière sélective un régime de transmission élevée, **caractérisé en ce que** le système comprend une partie de commande (50) qui peut être déplacé par l'utilisateur le long d'un trajet de commande d'une extrémité de faible rapport (60) à une extrémité de rapport élevé (62) et dont la position dicte le rapport du variateur et le rapport de transmission, un dispositif de commande d'embrayage de faible régime qui engage l'embrayage de faible régime (C_{L}), lorsque la partie de commande (50) est entre l'extrémité de faible rapport (60) de son trajet et un point de transition d'embrayage de faible régime (LCTP) et qui libère l'embrayage de faible régime (C_{L}) lorsque la partie de commande (50) se trouve entre le point de transition d'embrayage de faible régime (LCTP) et l'extrémité de rapport élevé (62) de son trajet, et une commande d'embrayage de régime élevé qui libère l'embrayage de régime élevé (C_{H}) lorsque la partie de commande (50) se trouve entre l'extrémité de faible rapport (60) de son trajet et un point de transition d'embrayage de régime élevé (HCTP) et qui engage l'embrayage de régime élevé (C_{H}) lorsque la partie de commande (50) se trouve entre le point de transition d'embrayage de régime élevé (HCTP) et l'extrémité de rapport élevé (62) de son trajet.

2. Système selon la revendication 1, dans lequel le point de transition d'embrayage de faible régime et le point de transition d'embrayage de régime élevé sont tous deux en des points du trajet de commande correspondant à un rapport synchrone du variateur.

3. Système selon la revendication 1, dans lequel le point de transition d'embrayage de régime élevé est plus proche de l'extrémité de faible rapport du trajet de commande que le point de transition d'embrayage de faible régime, de sorte que, lorsque la partie de commande (50) se trouve entre les points de transition, les deux embrayages (C_{L}, C_{H}) sont engagés.

4. Système selon la revendication 1, dans lequel le point de transition d'embrayage de régime élevé et le point de transition d'embrayage de faible régime sont les mêmes.

5. Système selon l'une quelconque des revendications précédentes, comprenant un mécanisme de conversion qui convertit la position de la partie de commande (50) en un signal mécanique représentant le rapport requis du variateur.

6. Système selon la revendication 5, dans lequel le mécanisme de conversion comprend une surface de came (78) et un suiveur (80) dont la position forme le signal mécanique.

7. Système selon la revendication 6, dans lequel la forme de la surface de came (18) est telle que, lorsque la partie de commande (50) est déplacée de l'extrémité de faible rapport à l'extrémité de rapport élevé de son trajet de commande, le suiveur (80) soit déplacé par la surface de came (78) tout d'abord dans un premier sens et ensuite dans le sens opposé.

8. Système selon la revendication 7, dans lequel l'inversion de sens du mouvement du suiveur (80) a lieu lorsque le suiveur (80) est dans une position correspondant au rapport neutre engrené du variateur.

9. Système selon l'une quelconque des revendications 5 à 8, dans lequel le signal mécanique représentant le rapport requis du variateur est couplé à un comparateur qui reçoit également un signal mécanique représentant un rapport courant du variateur et qui fournit un signal mécanique représentant une erreur de rapport du variateur.

10. Système selon la revendication 9 dans la mesure où elle dépend de la revendication 6, dans lequel le comparateur comprend une barre (82) couplée en un premier point au suiveur (80) et en un second point à un couplage avec les galets (84) du variateur, le signal mécanique étant ménagé par un couplage avec la barre (80) intermédiaire entre lesdits premier et second points.

11. Système selon la revendication 9 ou la revendication 10, dans lequel le comparateur commande une soupape de commande de rapport aménagée pour appliquer une pression de commande hydraulique au variateur (10).

12. Système selon l'une quelconque des revendications précédentes, dans lequel la partie de commande (50) peut être déplacée dans un premier sens pour changer le rapport du variateur et dans un second sens pour changer les états des embrayages de régime élevé et de régime faible.

13. Système selon la revendication 12, dans lequel le trajet de commande a :
(a) une première portion s'étendant de l'extrémité de faible rapport du déplacement de la partie de commande (50) et le long dudit premier sens,
(b) une deuxième portion s'étendant le long dudit second sens, et
(c) une troisième portion s'étendant le long dudit premier sens,
de sorte que le déplacement de la partie de commande de l'extrémité de faible rapport du trajet à l'extrémité de rapport élevé implique son déplacement le long de la deuxième portion pour changer les états de la soupape et ainsi exécuter un changement de régime.

14. Système selon la revendication 12 ou la revendication 13, comprenant au moins une soupape couplée en service à la partie de commande (50) de sorte que son état puisse être changé en déplaçant la partie de commande (50) le long du second sens, la soupape commandant la pression hydraulique appliquée à au moins l'un des embrayages (C_{L}, C_{H}).
